# FASCICULE DE BREVET EUROPEEN

(11) **EP 4 355 655 B1**
(45) Date de publication et mention de la délivrance du brevet: **07.05.2025**
(21) Numéro de dépôt: 22733641.9
(22) Date de dépôt: 17.06.2022
(51) Int. Cl.: B64C 25/10, G01B 11/26, B64C 25/00

(54) **ATTERRISSEUR D'AÉRONEF ÉQUIPÉ D'UN CAPTEUR DE FORME**
LANDEGESTELL AUSGERÜSTET MIT EINEM FORMSENSOR
LANDING GEAR EQUIPPED WITH A SHAPE SENSOR

(30) Priorité: 18.06.2021 FR 2106524
(43) Date de publication de la demande: 24.04.2024
(73) Titulaire: Safran Landing Systems, 78140 Vélizy-Villacoublay (FR)
(72) Inventeur: NGUYEN, Nicolas, 77550 MOISSY-CRAMAYEL (FR); DUBACHER, Bertrand, 77550 MOISSY-CRAMAYEL (FR)
(74) Mandataire: Cabinet Boettcher
(86) Numéro de dépôt international: PCT/EP2022/066616
(87) Numéro de publication internationale: WO 2022/263660

(56) Documents cités:
- CN-B- 114 459 644
- FR-A1- 2 787 761
- US-A1- 2014 252 210
- US-A1- 2021 024 200
- US-B1- 7 274 310
- US-B2- 10 732 023
- IELE A ET AL: "Load monitoring of aircraft landing gears using fiber optic sensors", SENSORS AND ACTUATORS A: PHYSICAL, ELSEVIER BV, NL, vol. 281, 17 August 2018 (2018-08-17), pages 31 - 41, XP085496992, ISSN: 0924-4247, DOI: 10.1016/J.SNA.2018.08.023

## Description

La présente invention concerne le domaine des trains d'atterrissage et plus particulièrement les moyens permettant de détecter des positions d'un atterrisseur.

### ARRIERE PLAN DE L'INVENTION

On connaît des atterrisseurs d'aéronef comprenant une jambe montée mobile sur la structure d'un aéronef entre une position déployée (pour le décollage et l'atterrissage) et une position rétractée (pour le vol) sous l'action d'un actionneur de manœuvre.

Certains de ces atterrisseurs, et en particulier les atterrisseurs auxiliaires comportent une partie basse mobile en translation et en rotation afin notamment de permettre l'amortissement et la direction de l'aéronef au sol. A cet effet, la jambe est généralement constituée d'un caisson dans lequel est montée à coulissement une tige portant les roues de l'atterrisseur, et d'un manchon tournant entourant une partie inférieure du caisson ou d'un tube tournant inséré entre le caisson et la tige coulissante. Le manchon (ou le tube tournant) est relié à la tige par un compas articulé. Des actionneurs permettent de faire pivoter le manchon (ou le tube tournant), et donc les roues, en réponse à un ordre d'orientation généré par exemple au moyen d'un volant de commande dans le cockpit.

Pour des raisons de sécurité, de tels atterrisseurs doivent remonter aux systèmes de l'aéronef des informations sur l'état de l'atterrisseur afin par exemple d'autoriser la rétraction ou le changement d'orientation de la jambe en fonction des différents modes de fonctionnement de l'aéronef (taxiage, décollage, atterrissage, vol...).

Pour remonter de telles informations il est connu d'utiliser des contacteurs ou des capteurs de position sans contact.

La branche supérieure du compas est par exemple équipée d'une cible magnétique agencée pour être en regard d'un capteur à effet Hall fixé sur le caisson lorsque la tige est dans une position extrême détendue. En fonctionnement, la présence de la cible magnétique devant le capteur à effet Hall permet de générer un signal traduisant le fait que les roues ne sont pas en contact avec le sol et donc que l'aéronef est en vol.

Il est également courant d'équiper la jambe d'un potentiomètre ou d'un capteur de type RVDT (de l'anglais « Rotary Variable Differential Transformer ») pour recopier une position angulaire du manchon, et donc de la tige portant les roues, via un système de démultiplication par engrenages.

Néanmoins, un tel système de recopie ne permet pas de capter la position angulaire exacte de la tige, la position mesurée par le système cumulant les imprécisions liées aux jeux mécaniques de fonctionnement de la jambe (tige, compas, manchon, engrenages) et aux erreurs de mesure électrique du capteur.

Par ailleurs, l'intégration de contacteurs ou de capteurs de position sans contact tend à augmenter la masse de l'atterrisseur et nécessite le routage de câbles souvent blindés avec des rayons de courbure contraignant à intégrer.

Qui plus est, le réglage de tels capteurs peut s'avérer compliqué, notamment lors de leur installation ou de leur remplacement.

Le document US 7 274 310 B1 divulgue un atterrisseur de l'art antérieur.

### OBJET DE L'INVENTION

L'invention a donc pour but de proposer un atterrisseur d'aéronef permettant d'obvier au moins en partie aux inconvénients précités.

### RESUME DE L'INVENTION

A cet effet, on propose un atterrisseur d'aéronef comprenant un élément fixe et au moins un élément mobile qui peut se déplacer relativement à l'élément fixe entre une première position et une deuxième position, et des moyens de détection agencés pour détecter lorsque l'élément mobile est dans au moins l'une de ses positions.

Selon l'invention, les moyens de détection comprennent au moins un capteur de forme, filiforme et souple, relié à une unité électronique de traitement agencée pour déduire la position de l'élément mobile de la forme du capteur de forme. Le capteur de forme comporte un premier tronçon solidarisé à l'élément fixe et un deuxième tronçon solidarisé à l'élément mobile de sorte que le premier tronçon et le deuxième tronçon sont immobiles vis-à-vis de l'élément fixe et de l'élément mobile respectivement, et sont mobiles relativement l'un à l'autre.

Ainsi, le déplacement de l'élément mobile entre la première et la deuxième position entraine une déformation du capteur (à l'exception au moins des premier et deuxième tronçons) représentative d'une position de l'élément mobile par rapport à l'élément fixe, et donc d'un état de l'atterrisseur. L'unité électronique de traitement permet de déterminer la forme du capteur de forme et d'en déduire l'état de l'atterrisseur. Un apprentissage lors de l'installation ou du remplacement du capteur peut être nécessaire, mais il est « logiciel » et n'est pas tributaire de réglages mécaniques complexes.

Par ailleurs, un tel capteur peut fournir plusieurs informations sur l'état de l'atterrisseur et donc remplacer plusieurs capteurs, ce qui permet de limiter la masse dudit atterrisseur et simplifie son intégration.

Selon un mode de réalisation particulier de l'invention, le capteur de forme est un capteur de forme à fibre optique. Ce type de capteur est particulièrement léger et facile à installer.

De manière particulière, le capteur de forme comprend une fibre optique à réseau de Bragg.

De manière particulière, le capteur de forme comprend une fibre optique à multiplexage de longueur d'onde de type WDM.

De manière particulière, le capteur de forme comprend une fibre optique à réflectométrie fréquentielle de type OFDR.

Selon un mode de réalisation particulier de l'invention, l'atterrisseur comprend une jambe constituée d'un caisson dans lequel est montée à coulissement selon un axe Z une tige dont une extrémité inférieure porte des roues, et d'un manchon tournant autour de l'axe Z et entourant une partie inférieure du caisson. Le manchon est relié par un compas articulé à la tige coulissante. Le premier tronçon et le deuxième tronçon du capteur de forme sont respectivement solidaires du caisson et de la tige.

Selon un autre mode de réalisation particulier de l'invention, l'atterrisseur comprend une jambe constituée d'un caisson dans lequel est montée à coulissement selon un axe Z une tige dont une extrémité inférieure porte des roues, et d'un manchon tournant entourant une partie inférieure du caisson et relié par un compas articulé à la tige coulissante. Le premier tronçon et le deuxième tronçon du capteur de déformation sont respectivement solidaires du caisson et du compas.

L'invention concerne aussi un procédé pour mesurer à un instant t une course de la tige de l'atterrisseur d'un tel atterrisseur, dans lequel l'unité électronique de traitement réalise les étapes suivantes :
- lorsque ladite tige est dans une position extrême détendue, déterminer et enregistrer à partir d'un signal lumineux introduit dans le capteur de forme une position de référence selon l'axe Z d'un point de mesure du deuxième tronçon du capteur de forme ;
- à l'instant *t*, déterminer la position du point de mesure à partir du signal lumineux introduit dans le capteur de forme ;
- calculer la différence entre la position de référence et la position à l'instant *t* ; et
- déduire de cette différence la course de la tige à l'instant *t*.

L'invention concerne également un procédé pour mesurer à un instant t une course de la tige d'un tel atterrisseur, dans lequel le compas comprend une branche supérieure articulée sur le manchon et une branche inférieure articulée sur la branche supérieure et sur la tige, la branche supérieure et la branche inférieure définissant un angle d'ouverture du compas. L'unité électronique de traitement réalise les étapes suivantes :
- lorsque ladite tige est dans une position extrême détendue, déterminer et enregistrer à partir d'un signal lumineux introduit dans le capteur de forme un angle d'ouverture de référence du compas ;
- à l'instant t, déterminer l'angle d'ouverture du compas à partir du signal lumineux introduit dans le capteur de forme ;
- calculer la différence entre l'angle d'ouverture de référence et l'angle d'ouverture à l'instant *t* ; et
- déduire de cette différence la course à l'instant *t* de la tige par trigonométrie.

L'invention concerne en outre un procédé pour mesurer à un instant *t* une position angulaire de la tige d'un tel atterrisseur, dans lequel l'unité électronique de traitement réalise les étapes suivantes :
- lorsque les roues sont orientées suivant un axe longitudinal de l'aéronef, déterminer et enregistrer à partir d'un signal lumineux introduit dans le capteur de forme une position de référence d'un point de mesure du deuxième tronçon du capteur de forme ;
- à l'instant *t*, déterminer la position du point de mesure à partir du signal lumineux introduit dans le capteur de forme ;
- calculer l'angle formé par la position de référence et la position à l'instant *t* vis-à-vis de l'axe Z de coulissement et de rotation de la tige ; et
- déduire de cet angle la position angulaire de la tige à l'instant *t*.

L'invention concerne de plus un procédé pour mesurer à un instant t une position angulaire de la tige d'un tel atterrisseur, dans laquelle l'unité électronique de traitement réalise les étapes suivantes :
- lorsque les roues sont orientées suivant un axe longitudinal de l'aéronef, déterminer et enregistrer à partir d'un signal lumineux introduit dans le capteur de forme des positions de référence d'au moins deux points de mesure du deuxième tronçon du capteur de forme agencés dans un plan XY orthogonal à l'axe Z de coulissement et de rotation de la tige ;
- à l'instant *t*, déterminer des positions des points de mesure à partir du signal lumineux introduit dans le capteur de forme ; et
- calculer l'angle formé par la droite définie par les positions de référence et la droite définie par les positions à l'instant t ; et
- déduire de cet angle la position angulaire de la tige à l'instant *t*.

### BREVE DESCRIPTION DES DESSINS

L'invention sera mieux comprise à la lumière de la description qui suit, laquelle est purement illustrative et non limitative, et doit être lue en regard des figures annexées parmi lesquelles :
[Fig.1] la figure 1 est une vue d'un atterrisseur selon un mode de réalisation particulier de l'invention ;
[Fig.2] la figure 2 est une vue schématique d'une méthode pour déterminer à un instant t une position angulaire de la tige de l'atterrisseur illustré à la figure 1 ;
[Fig.3] la figure 3 est une vue schématique d'une variante de la méthode illustrée à la figure 2.

### DESCRIPTION DETAILLEE DE L'INVENTION

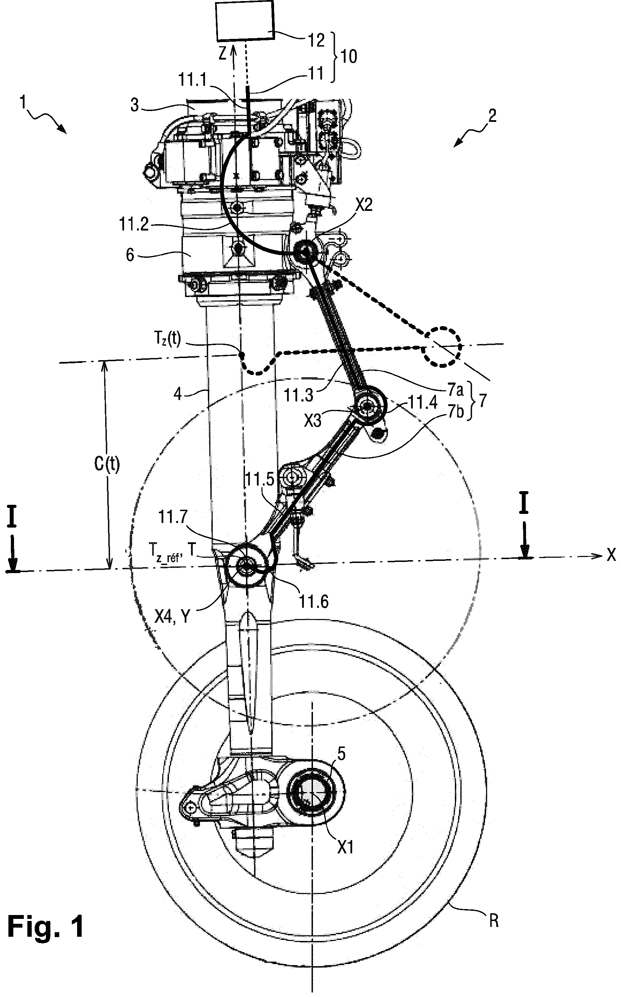

En référence à la figure 1, un atterrisseur 1 d'aéronef comprend de façon connue en soi une jambe 2 portant des roues R en partie basse. La jambe 2 comporte un caisson 3 monté articulé sur une structure de l'aéronef. Dans le caisson 3 coulisse une tige 4, selon un axe Z longitudinal de la tige 4, entre une première position extrême dite détendue (illustrée ici) et une deuxième position extrême dite comprimée. Une extrémité inférieure de la tige 4 porte un essieu 5 recevant des roues R montées mobiles en rotation autour d'un axe X1 sensiblement horizontal en service.

Un manchon 6 est monté tournant autour de l'axe Z sur une partie basse du caisson 3 pour être orienté de façon commandée par un organe d'orientation, connu en lui-même, tel que des vérins montés en « push-pull », un arrangement à crémaillère ou un actionneur rotatif. Le manchon 6 et la tige 4 sont liés en rotation par un compas 7, de sorte que l'orientation du manchon 6 entraîne l'orientation de la tige 4 et donc des roues R. Le compas 7 comprend une branche supérieure 7a articulée sur le manchon 6 selon un axe X2 d'articulation, et une branche inférieure 7b articulée sur la branche supérieure 7a et la tige 4 selon des axes X3 et X4 d'articulation respectifs. Les axes X2, X3, X4 d'articulation du compas sont sensiblement parallèles à l'axe X1 de rotation des roues R.

Tout ceci est bien connu et n'est rappelé qu'à titre d'information pour situer le contexte de l'invention.

Selon l'invention, un côté de l'atterrisseur 1 est équipé d'un capteur de forme 10, filiforme et souple, comprenant une fibre optique 11 solidarisée à la fois au caisson 3, aux branches supérieure et inférieure 7a, 7b du compas 7 et à la tige 4 comme cela sera expliqué ci-après.

La fibre optique 11 comporte un premier tronçon 11.1 fixé sur une surface externe du caisson 3 pour s'étendre suivant l'axe Z de coulissement de la tige 4, un troisième tronçon 11.3 fixé sur une surface externe de la branche supérieure 7a du compas 7 pour s'étendre suivant un axe longitudinal de ladite branche supérieure 7a, un cinquième tronçon 11.5 fixé sur une surface externe de la branche inférieure 7b du compas 7 pour s'étendre suivant un axe longitudinal de ladite branche inférieure 7b, et un septième tronçon 11.7 fixé sur la tige 4 pour s'étendre suivant l'axe X4 d'articulation. Les premier, troisième, cinquième et septième tronçons 11.1, 11.3, 11.5, 11.7 sont sensiblement rectilignes et sont immobiles vis-à-vis respectivement du caisson 3, de la branche supérieure 7a, de la branche inférieure 7b et de la tige 4.

La fibre optique 11 comprend également un deuxième tronçon 11.2 reliant le premier tronçon 11.1 et troisième tronçon 11.3, un quatrième tronçon 11.4 reliant le troisième tronçon 11.3 et le cinquième tronçon 11.5, et un sixième tronçon 11.6 reliant le cinquième tronçon 11.5 et le septième tronçon 11.7. Les deuxième, quatrième et sixième tronçons 11.2, 11.4, 11.6 sont libres de toute attache hormis à leurs extrémités et forment ainsi des boucles d'aisance dont le parcours est essentiellement donné par la raideur de la fibre optique 11 et les positions relatives des premier, troisième, cinquième et septième tronçons 11.1, 11.3, 11.5, 11.7 les uns par rapport aux autres. Au besoin, le parcours des boucles d'aisance peut aussi être défini par des éléments de guidage mécaniques fixés sur l'atterrisseur.

Une extrémité libre du premier tronçon 11.1 est reliée à une unité électronique de traitement 12, appelée aussi interrogateur, qui est adaptée à la technologie de la fibre optique 11 du capteur de forme 10.

De façon connue en soi, l'interrogateur 12 introduit un signal lumineux à une extrémité libre du premier tronçon 11.1. Le signal lumineux se propage à travers la fibre optique 11 jusqu'à une extrémité libre du septième tronçon 11.7 et est partiellement réfléchi par le cœur de la fibre optique 11 en différents points de mesure répartis sur l'ensemble des tronçons 11.1-11.7. Toute déformation de la fibre optique 11 engendre une variation du spectre de la partie du signal réfléchi au niveau de chaque point de mesure. Cette variation est analysée par l'interrogateur 12 pour en déduire les modifications de forme appliquées à la fibre optique 11 entre les différents points de mesure en déterminant notamment les coordonnées desdits points de mesure.

Une méthode pour déterminer à un instant t une course C de la tige 4 via le capteur de forme 10 va maintenant être détaillée.

Alors que la tige est en position extrême détendue (illustrée à la figure 1), l'interrogateur 12 détermine et enregistre, via un signal lumineux introduit dans la fibre optique 11, une position de référence T_{z_réf} selon l'axe Z d'un point de mesure T du septième tronçon 11.7. Cette étape pourra par exemple être réalisée en usine lorsque l'atterrisseur 1 est dans un état détendu dans lequel les roues R ne touchent pas le sol.

A l'atterrissage, le contact des roues R avec le sol entraîne le coulissement de la tige 4 vers l'intérieur du caisson 1, ce qui engendre simultanément une translation du septième tronçon 11.7 suivant l'axe Z et une rotation des branches supérieures et inférieures 7a, 7b du compas 7 autour des axes X2, X3, X4 d'articulation, et donc une déformation des deuxième, quatrième et sixième tronçons 11.2, 11.4, 11.6.

L'interrogateur 12 détermine, à chaque instant *t*, une position T_{z}(t) suivant l'axe Z du point de mesure T puis en déduit la course C de la tige en comparant la position de référence T_{z_réf} et la position T_{z}(t) suivant la formule suivante : *C*(*t*) = *T_{z_réf} - T_{z}*(*t*)*.*

Lorsque la course C dépasse un seuil prédéterminé (ici de l'ordre de quelques millimètres), il est considéré que les roues R sont en contact avec le sol.

L'application de cette méthode à plusieurs points de mesure T du septième tronçon 11.7 permet d'améliorer la précision mais aussi la robustesse avec laquelle la course C de la tige 4 est déterminée.

Il est également possible de relier par trigonométrie la course C de la tige 4 à l'angle d'ouverture α du compas 7 défini par les axes longitudinaux des branches supérieure et inférieure 7a, 7b. Une autre méthode consiste donc à comparer l'angle d'ouverture α_{réf} du compas 7 lorsque la tige 4 est en position extrême détendue avec celui α(t) à l'instant t. Ces angles d'ouverture α_{réf}, α(t) peuvent être déduits de positions déterminées par l'interrogateur 12 d'au moins deux points de mesure sur chacun des troisième et cinquième tronçons 11.3, 11.5.

L'utilisation simultanée de ces deux méthodes permet d'obtenir une redondance de la course C sans ajout de capteurs supplémentaires.

L'ajout d'un deuxième capteur de forme 10 équipant de manière similaire l'autre côté de l'atterrisseur permet également d'améliorer de manière significative la robustesse de la course C déterminée par la mise en œuvre d'au moins l'une des deux méthodes.

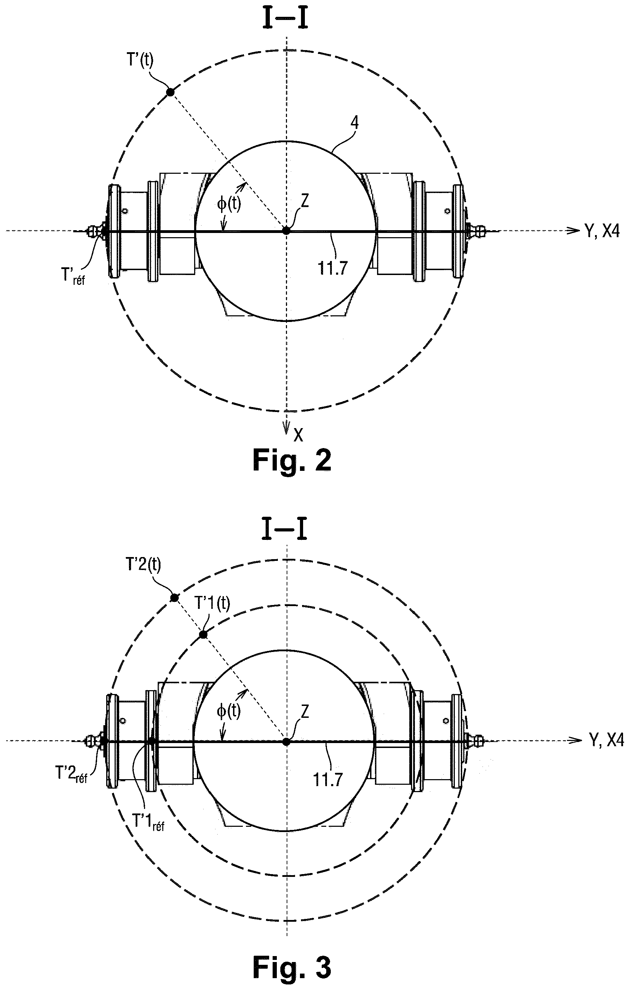

En référence à la figure 2, une méthode pour déterminer à un instant t une position angulaire Ø de la tige 4, et donc une orientation des roues R, via le capteur de forme 10 va maintenant être détaillée.

Alors que les roues R sont orientées suivant un axe longitudinal de l'aéronef, l'interrogateur 12 détermine et enregistre, via un signal lumineux introduit dans la fibre optique 11, une position de référence T'_{réf} d'un point de mesure T' du septième tronçon 11.7. Cette étape pourra par exemple être réalisée en usine une fois l'atterrisseur 1 monté sur la structure de l'aéronef.

Lorsque l'aéronef se déplace au sol, les vérins d'orientation sont amenés à commander une rotation du manchon 6, ce qui engendre une rotation des troisième, cinquième et septième tronçons 11.3, 11.5, 11.7 autour de l'axe Z, et donc une déformation du deuxième tronçon 11.2.

L'interrogateur 12 détermine, à chaque instant t, une position T' (t) du point de mesure T' pour en déduire la position angulaire Ø de la tige 4 définie par l'angle Ø(t) formé par les positions T'_{réf}, T' du points de mesure T vis-à-vis de l'axe Z.

L'application de cette méthode à plusieurs points de mesure T' du septième tronçon 11.7 permet d'améliorer la précision mais aussi la robustesse avec laquelle la position angulaire Ø de la tige 4 est déterminée.

Une autre méthode consiste à déterminer et enregistrer via l'interrogateur 12, lorsque les roues R sont orientées suivant l'axe longitudinal de l'aéronef, les positions T1'_{réf}, T2'_{réf} d'au moins deux points de mesure T1', T2' du septième tronçon 11.7. L'interrogateur 12 détermine ensuite à l'instant t les positions T1' (t), T2' (t) des points de mesure T1', T2' pour en déduire la position angulaire Ø de la tige 4 définie par l'angle Ø(t) formé par les droites (T1'_{réf}, T2'_{réf}) et (T1'(t), T2'(t)).

On notera qu'un seul capteur de forme 10 permet ici d'obtenir plusieurs informations distinctes sur l'état de l'atterrisseur 1, à savoir l'orientation des roues R et leur contact avec le sol.

L'application de cette méthode à plusieurs couples de points de mesure T1', T2' du septième tronçon 11.7 permet d'améliorer la précision mais aussi la robustesse avec laquelle la position angulaire Ø de la tige 4 est déterminée.

Bien entendu, l'invention n'est pas limitée au mode de réalisation décrit mais englobe toute variante entrant dans le champ de l'invention telle que définie par les revendications.

Plusieurs technologies de fibre optique peuvent être employées : réseau de Bragg (Fiber Bragg Grating), multiplexage de longueur d'onde de type WDM (Wavelength Division Multiplexing), réflectométrie fréquentielle de type OFDR (Optical Frequency Domain Reflectometry)...

Bien que le capteur de forme soit ici un capteur à base de fibre optique, le principe s'applique à tout capteur de forme.

Dans le cas où la jambe 2 est montée mobile sur la structure de l'aéronef entre une position déployée (pour le décollage et l'atterrissage) et une position rétractée (pour le vol), la jambe 2 est généralement maintenue dans la position déployée par une contrefiche briseuse qui est attelée à la jambe 2 et à la structure de l'aéronef, et qui comporte deux bielles articulées entre elles. Les bielles sont maintenues en position alignée par un organe de stabilisation comprenant deux biellettes articulées entre elles. Il est possible d'équiper les bielles et/ou les biellettes d'un capteur de forme 10 tel que celui décrit ici pour déterminer la position de la jambe et/ou s'assurer du bon verrouillage de l'organe de stabilisation.

Bien que le septième tronçon 11.7 soit ici colinéaire avec l'axe X4 d'articulation du compas 7 sur la tige 4, il peut aussi s'étendre dans un plan XY sensiblement orthogonal à l'axe Z. De préférence alors, les points de mesure T1', T2' formeront une droite coupant l'axe Z.

## Revendications

1. Atterrisseur (1) d'aéronef comprenant un élément fixe (3) et au moins un élément mobile (4, 6, 7) qui peut se déplacer relativement à l'élément fixe entre une première position et une deuxième position, et des moyens de détection agencés pour détecter lorsque l'élément mobile est dans au moins l'une de ses positions, **caractérisé en ce que** les moyens de détection comprennent au moins un capteur de forme (10), filiforme et souple, relié à une unité électronique de traitement (12) agencée pour déduire la position de l'élément mobile de la forme du capteur de forme, le capteur de forme comportant un premier tronçon (11.1) solidarisé à l'élément fixe et un deuxième tronçon (11.3, 11.5, 11.7) solidarisé à l'élément mobile de sorte que le premier tronçon et le deuxième tronçon sont immobiles vis-à-vis de l'élément fixe et de l'élément mobile respectivement, et sont mobiles relativement l'un à l'autre.

2. Atterrisseur (1) selon la revendication 1, dans lequel le capteur de forme est un capteur de forme à fibre optique.

3. Atterrisseur (1) selon la revendication 2, dans lequel le capteur de forme (10) comprend une fibre optique (11) à réseau de Bragg.

4. Atterrisseur (1) selon la revendication 1, dans lequel le capteur de forme (10) comprend une fibre optique (11) à multiplexage de longueur d'onde de type WDM.

5. Atterrisseur (1) selon la revendication 1, dans lequel le capteur de forme (10) comprend une fibre optique (11) à réflectométrie fréquentielle de type OFDR.

6. Atterrisseur selon l'une quelconque des revendications précédentes, comprenant une jambe (2) constituée d'un caisson (3) dans lequel est montée à coulissement selon un axe (Z) une tige (4) dont une extrémité inférieure porte des roues (R), et d'un manchon (6) tournant entourant une partie inférieure du caisson et relié par un compas (7) articulé à la tige coulissante, le premier tronçon (11.1) et le deuxième tronçon (11.7) du capteur de forme (11) étant respectivement solidaires du caisson et de la tige.

7. Atterrisseur (1) selon l'une quelconque des revendications 1 à 5, comprenant une jambe (2) constituée d'un caisson (3) dans lequel est montée à coulissement selon un axe (Z) une tige (4) dont une extrémité inférieure porte des roues (R), et d'un manchon (6) tournant entourant une partie inférieure du caisson et relié par un compas (7) articulé à la tige coulissante, le premier tronçon (11.1) et le deuxième tronçon (11.3, 11.5) du capteur de forme (10) étant respectivement solidaires du caisson et du compas.

8. Procédé pour mesurer à un instant t une course (C) de la tige (4) de l'atterrisseur (1) selon les revendications 2 et 6, dans lequel l'unité électronique de traitement (12) réalise les étapes suivantes :
- lorsque ladite tige est dans une position extrême détendue, déterminer et enregistrer à partir d'un signal lumineux introduit dans le capteur de forme (10) une position de référence (T_{z_réf}) selon l'axe (Z) d'un point de mesure (T) du deuxième tronçon (11.7) du capteur de forme ;
- à l'instant t, déterminer la position (T_{z}(t)) du point de mesure (T) à partir du signal lumineux introduit dans le capteur de forme ;
- calculer la différence entre la position de référence (T_{z_réf}) et la position à l'instant t (T_{z}(t)) ; et
- déduire de cette différence la course C(t) de la tige (4) à l'instant t.

9. Procédé pour mesurer à un instant t une course (C) de la tige (4) de l'atterrisseur (1) selon la revendication 7, dans lequel le compas (7) comprend une branche supérieure (7a) articulée sur le manchon (6) et une branche inférieure (7b) articulée sur la branche supérieure et sur la tige, la branche supérieure et la branche inférieure définissant un angle d'ouverture (α) du compas et l'unité électronique de traitement (12) réalisant les étapes suivantes :
- lorsque ladite tige est dans une position extrême détendue, déterminer et enregistrer à partir d'un signal lumineux introduit dans le capteur de forme (10) un angle d'ouverture de référence (α_{réf}) du compas ;
- à l'instant *t*, déterminer l'angle d'ouverture (α(t)) du compas à partir du signal lumineux introduit dans le capteur de forme ;
- calculer la différence entre l'angle d'ouverture de référence (α_{réf}) et l'angle d'ouverture (α(t)) à l'instant *t* ; et
- déduire de cette différence la course C(t) à l'instant *t* de la tige par trigonométrie.

10. Procédé pour mesurer à un instant *t* une position angulaire (Ø) de la tige (4) de l'atterrisseur (1) selon la revendication 6, dans lequel l'unité électronique de traitement (12) réalise les étapes suivantes :
- lorsque les roues sont orientées suivant un axe longitudinal de l'aéronef, déterminer et enregistrer à partir d'un signal lumineux introduit dans le capteur de forme (10) une position de référence (T'_{réf}) d'un point de mesure (T') du deuxième tronçon (11.7) du capteur de forme ;
- à l'instant *t*, déterminer la position (T' (t)) du point de mesure (T') à partir du signal lumineux introduit dans le capteur de forme ;
- calculer l'angle (Ø(t)) formé par la position de référence (T'_{réf}) et la position à l'instant *t* (T'(t)) vis-à-vis de l'axe (Z) de coulissement de la tige ; et
- déduire de cet angle la position angulaire (Ø) de la tige à l'instant t.

11. Procédé pour mesurer à un instant *t* une position angulaire (Ø) de la tige (4) de l'atterrisseur (1) selon la revendication 6, dans lequel l'unité électronique de traitement (12) réalise les étapes suivantes :
- lorsque les roues sont orientées suivant un axe longitudinal de l'aéronef, déterminer et enregistrer à partir d'un signal lumineux introduit dans le capteur de forme (10) des positions de référence (T1'_{réf}, T2'_{réf}) d'au moins deux points de mesure (T1', T2') du deuxième tronçon (11.7) du capteur de forme agencés dans un plan (XY) orthogonal à l'axe (Z) de coulissement de la tige ;
- à l'instant t, déterminer des positions (T1'(t), T2' (t)) des points de mesure (T1', T2') à partir du signal lumineux introduit dans le capteur de forme ; et
- calculer l'angle (Ø(t)) formé par la droite définie par les positions de référence (T1'_{réf}, T2'_{réf}) et la droite définie par les positions à l'instant t (T1' (t), T2' (t)) ; et
- déduire de cet angle la position angulaire (Ø) de la tige à l'instant *t*.

## Patentansprüche

1. Fahrwerk (1) eines Luftfahrzeugs mit einem feststehenden Element (3) und zumindest einem beweglichen Element (4, 6, 7), das sich relativ zu dem feststehenden Element zwischen einer ersten Position und einer zweiten Position bewegen kann, und mit Sensormitteln zum Erkennen, wenn sich das bewegliche Element in zumindest einer seiner Positionen befindet, **dadurch gekennzeichnet, dass** die Sensormittel zumindest einen fadenförmigen und flexiblen Formsensor (10) umfassen, der mit einer elektronischen Verarbeitungseinheit (12) verbunden ist, die dafür ausgelegt ist, die Position des beweglichen Elements aus der Form des Formsensors abzuleiten, wobei der Formsensor einen fest mit dem feststehenden Element verbundenen, ersten Teilabschnitt (11.1) und einen fest mit dem beweglichen Element verbundenen, zweiten Teilabschnitt (11.3, 11.5, 11.7) enthält, sodass der erste Teilabschnitt und der zweite Teilabschnitt jeweils in Bezug auf das feststehende Element und auf das bewegliche Element unbeweglich sind und in Bezug zueinander beweglich sind.

2. Fahrwerk (1) nach Anspruch 1, wobei es sich bei dem Formsensor um einen faseroptischen Formsensor handelt.

3. Fahrwerk (1) nach Anspruch 2, wobei der Formsensor (10) einen Lichtwellenleiter (11) mit Faser-Bragg-Gitter umfasst.

4. Fahrwerk (1) nach Anspruch 1, wobei der Formsensor (10) einen Lichtwellenleiter (11) mit Wellenlängen-Multiplex vom Typ WDM umfasst.

5. Fahrwerk (1) nach Anspruch 1, wobei der Formsensor (10) einen Lichtwellenleiter (11) mit Frequenzbereichsreflektometrie vom Typ OFDR umfasst.

6. Fahrwerk nach einem der vorhergehenden Ansprüche, umfassend ein Bein (2) bestehend aus einem Kasten (3), in welchem eine Stange (4), deren unteres Ende Räder (R) trägt, entlang einer Achse (Z) verschiebbar angebracht ist, und aus einer Drehhülse (6), die einen unteren Teil des Kastens umgibt und durch einen Gelenkkompass (7) mit der Gleitstange verbunden ist, wobei der erste Teilabschnitt (11.1) und der zweite Teilabschnitt (11.7) des Formsensors (11) jeweils mit dem Kasten bzw. mit der Stange fest verbunden sind.

7. Fahrwerk (1) nach einem der Ansprüche 1 bis 5, umfassend ein Bein (2) bestehend aus einem Kasten (3), in welchem eine Stange (4), deren unteres Ende Räder (R) trägt, entlang einer Achse (Z) verschiebbar angebracht ist, und aus einer Drehhülse (6), die einen unteren Teil des Kastens umgibt und durch einen Gelenkkompass (7) mit der Gleitstange verbunden ist, wobei der erste Teilabschnitt (11.1) und der zweite Teilabschnitt (11.3, 11.5) des Formsensors (10) jeweils mit dem Kasten bzw. mit dem Kompass fest verbunden sind.

8. Messverfahren, das dazu dient, zu einem Zeitpunkt t einen Verfahrweg (C) der Stange (4) des Fahrwerks (1) nach den Ansprüchen 2 und 6 zu messen, wobei die elektronische Verarbeitungseinheit (12) die folgenden Schritte ausführt, die darin bestehen, dass sie:
- wenn sich die Stange in einer ausgestreckten Endstellung befindet, aus einem in den Formsensor (10) eingeleiteten Lichtsignal eine Referenzposition (T_{z_réf}) entlang der Achse (Z) eines Messpunkts (T) des zweiten Teilabschnitts (11.7) des Formsensors bestimmt und speichert;
- zum Zeitpunkt t aus dem in den Formsensor eingeleiteten Lichtsignal die Position (T_{z}(t)) des Messpunkts (T) bestimmt;
- die Differenz zwischen der Referenzposition (T_{z_réf}) und der Position zum Zeitpunkt t (T_{z}(t)) berechnet; und
- aus besagter Differenz den zum Zeitpunkt *t* zurückgelegten Verfahrweg C(t) der Stange (4) ableitet.

9. Messverfahren, das dazu dient, zu einem Zeitpunkt *t* einen Verfahrweg (C) der Stange (4) des Fahrwerks (1) nach Anspruch 7 zu messen, wobei der Kompass (7) einen an der Hülse (6) angelenkten, oberen Schenkel (7a) und einen an dem oberen Schenkel und an der Stange angelenkten, unteren Schenkel (7b) umfasst, wobei der obere Schenkel und der untere Schenkel einen Öffnungswinkel (α) des Kompasses definieren und die elektronische Verarbeitungseinheit (12) die folgenden Schritte ausführt, die darin bestehen, dass sie:
- wenn sich die Stange in einer ausgestreckten Endstellung befindet, aus einem in den Formsensor (10) eingeleiteten Lichtsignal, einen Referenz-Öffnungswinkel (α_{réf}) des Kompasses bestimmt und speichert;
- zum Zeitpunkt *t* aus dem in den Formsensor eingeleiteten Lichtsignal den Öffnungswinkel (α(t)) des Kompasses bestimmt;
- die Differenz zwischen dem Referenz-Öffnungswinkel (α_{réf}) und dem Öffnungswinkel (α(t)) zum Zeitpunkt *t* berechnet; und
- aus besagter Differenz den zum Zeitpunkt *t* zurückgelegten Verfahrweg C(t) der Stange durch Trigonometrie ableitet.

10. Messverfahren, das dazu dient, zu einem Zeitpunkt *t* eine Winkelposition (Ø) der Stange (4) des Fahrwerks (1) nach Anspruch 6 zu messen, wobei die elektronische Verarbeitungseinheit (12) die folgenden Schritte ausführt, die darin bestehen, dass sie:
- wenn die Räder entlang einer Längsachse des Luftfahrzeugs ausgerichtet sind, aus einem in den Formsensor (10) eingeleiteten Lichtsignal eine Referenzposition (T'_{réf}) eines Messpunkts (T') des zweiten Teilabschnitts (11.7) des Formsensors bestimmt und speichert;
- zum Zeitpunkt *t* aus dem in den Formsensor eingeleiteten Lichtsignal die Position (T'(t)) des Messpunkts (T') bestimmt;
- den Winkel (Ø(t)), der von der Referenzposition (T'_{réf}) und der Position zum Zeitpunkt *t* T'(t)) in Bezug auf die Gleitachse (Z) der Stange gebildet wird, berechnet; und
- aus besagtem Winkel die Winkelposition (Ø) der Stange zum Zeitpunkt *t* ableitet.

11. Messverfahren, das dazu dient, zu einem Zeitpunkt *t* eine Winkelposition (Ø) der Stange (4) des Fahrwerks (1) nach Anspruch 6 zu messen, wobei die elektronische Verarbeitungseinheit (12) die folgenden Schritte ausführt, die darin bestehen, dass sie:
- wenn die Räder entlang einer Längsachse des Luftfahrzeugs ausgerichtet sind, aus einem in den Formsensor (10) eingeleiteten Lichtsignal Referenzpositionen (T1'_{réf}, T2'_{réf}) von zumindest zwei Messpunkten (T1', T2') des zweiten Teilabschnitts (11.7) des Formsensors, die in einer Ebene (XY) orthogonal zur Gleitachse (Z) der Stange angeordnet sind, bestimmt und speichert;
- zum Zeitpunkt t aus dem in den Formsensor eingeleiteten Lichtsignal Positionen (T1' (t), T2' (t)) der Messpunkte (T1', T2') bestimmt; und
- den Winkel (Ø(t)), den die durch die Referenzpositionen (T1'_{réf}, T2'_{réf}) definierte Gerade und die durch die Positionen zum Zeitpunkt *t* (T1'(t), T2'(t)) definierte Gerade miteinander bilden, berechnet; und
- aus besagtem Winkel die Winkelposition (Ø) der Stange zum Zeitpunkt *t* ableitet.

## Claims

1. Aircraft landing gear (1) comprising a stationary element (3) and at least one movable element (4, 6, 7) which can move relative to the stationary element between a first position and a second position, and detection means arranged to detect when the movable element is in at least one of its positions, **characterised in that** the detection means comprise at least one threadlike and flexible shape sensor (10), connected to an electronic processing unit (12) arranged to deduce the position of the movable element of the shape of the shape sensor, the shape sensor comprising a first section (11.1) rigidly connected to the stationary element and a second section (11.3, 11.5, 11.7) rigidly connected to the movable element so that the first section and the second section are immobile with respect to the stationary element and the movable element respectively, and are movable relative to one another.

2. Landing gear (1) according to claim 1, wherein the shape sensor is an optical fibre shape sensor.

3. Landing gear (1) according to claim 2, wherein the shape sensor (10) comprises a Bragg grated optical fibre (11).

4. Landing gear (1) according to claim 1, wherein the shape sensor (10) comprises a WDM-type wavelength multiplexing optical fibre (11).

5. Landing gear (1) according to claim 1, wherein the shape sensor (10) comprises an OFDR-type frequency domain reflectometry optical fibre (11).

6. Landing gear according to any one of the preceding claims, comprising a strut (2) constituted of a box (3) wherein a rod (4) is slidingly mounted about an axis (Z), a lower end of which carries wheels (R), and a rotating sleeve (6) surrounding a lower part of the box and connected by a compass (7) articulated to the sliding rod, the first section (11.1) and the second section (11.7) of the shape sensor (11) being respectively rigidly connected to the box and to the rod.

7. Landing gear (1) according to any one of claims 1 to 5, comprising a strut (2) constituted of a box (3) wherein a rod (4) is slidingly mounted about an axis (Z), a lower end of which carries wheels (R), and a rotating sleeve (6) surrounding a lower part of the box and connected by a compass (7) articulated to the sliding rod, the first section (11.1) and the second section (11.3, 11.5) of the shape sensor (10) being respectively rigidly connected to the box and to the compass.

8. Method for measuring at an instant t a stroke (C) of the rod (4) of the landing gear (1) according to claims 2 and 6, wherein the electronic processing unit (12) carries out the following steps:
. when said rod is in a relaxed extreme position, determining and recording from a light signal introduced in the shape sensor (10) a reference position (T_{z_ref}) about the axis (Z) of a measuring point (T) of the second section (11.7) of the shape sensor;
. at the instant *t*, determining the position (T_{z}(t)) of the measuring point (T) from the light signal introduced in the shape sensor;
. calculating the difference between the reference position (T_{z_ref}) and the position at the instant *t* (T_{z}(t)); and
. deducing from this difference, the stroke C(t) of the rod (4) at the instant t.

9. Method for measuring at an instant t, a stroke (C) of the rod (4) of the landing gear (1) according to claim 7, wherein the compass (7) comprises an upper branch (7a) articulated on the sleeve (6) and a lower branch (7b) articulated on the upper branch and on the rod, the upper branch and the lower branch defining an opening angle (α) of the compass and the electronic processing unit (12) carrying out the following steps:
. when said rod is in a relaxed extreme position, determining and recording from a light signal introduced in the shape sensor (10) a reference opening angle (α_{ref}) of the compass;
. at the instant *t*, determining the opening angle (α(t)) of the compass from the light signal introduced in the shape sensor;
. calculating the difference between the reference opening angle (α_{ref}) and the opening angle (α(t)) at the instant t; and
. deducing from this difference the stroke C(t) at the instant t of the rod by trigonometry.

10. Method for measuring at an instant *t*, an angular position (Ø) of the rod (4) of the landing gear (1) according to claim 6, wherein the electronic processing unit (12) carries out the following steps:
. when the wheels are oriented about a longitudinal axis of the aircraft, determining and recording from a light signal introduced in the shape sensor (10) a reference position (T'_{ref}) of a measuring point (T') of the second section (11.7) of the shape sensor;
. at the instant t, determining the position (T'(t)) of the measuring point (T') from the light signal introduced in the shape sensor;
. calculating the angle (Ø(t)) formed by the reference position (T'_{ref}) and the position at the instant *t* (T' (t)) with respect to the sliding axis (Z) of the rod; and
. deducing from this angle the angular position (Ø) of the rod at the instant t.

11. Method for measuring at an instant *t*, an angular position (Ø) of the rod (4) of the landing gear (1) according to claim 6, wherein the electronic processing unit (12) carried out the following steps:
. when the wheels are oriented about a longitudinal axis of the aircraft, determining and recording from a light signal introduced in the shape sensor (10) reference positions (T1'_{ref}, T2'_{ref}) of at least two measuring points (T1', T2') of the second section (11.7) of the shape sensor arranged in a plane (XY) orthogonal to the sliding axis (Z) of the rod;
. at the instant *t*, determining positions (T1'(t), T2'(t)) of the measuring points (T1', T2') from the light signal introduced in the shape sensor; and
. calculating the angle (Ø(t)) formed by the straight line defined by the reference positions (T1'_{ref}, T2'_{ref}) and the straight line defined by the positions at the instant *t* (T1'(t), T2'(t)); and
. deducing from this angle, the angular position (Ø) of the rod at the instant *t*.
